# FASCICULE DE BREVET EUROPEEN

(11) **EP 0 675 861 B1**
(45) Date de publication et mention de la délivrance du brevet: **23.04.1997**
(21) Numéro de dépôt: 94903916.8
(22) Date de dépôt: 23.12.1993
(51) Int. Cl.: C04B 35/83, B32B 18/00

(54) **ISOLANT THERMIQUE STRUCTURAL EN CARBONE ET SON PROCEDE DE FABRICATION**
WÄRMEDÄMMSTOFF AUS KOHLENSTOFF UND SEIN HERSTELLUNGSVERFAHREN
CARBON STRUCTURAL THERMAL INSULATOR AND METHOD FOR PRODUCING SAME

(30) Priorité: 27.12.1992 RU 9201363
(43) Date de publication de la demande: 11.10.1995
(73) Titulaire: AEROSPATIALE Société Nationale Industrielle, 75781 Paris Cédex 16 (FR); NIIGrafit Research Institute, Moscow, 111524 (RU)
(72) Inventeur: KOLESNIKOV, Sergey Anatoljevich, Building 1, Flat 68 Moscow, 111402 (RU); KOSTIKOV, Valery Ivanovich, Building 2, Flat 12 Moscow, 117331 (RU); DEMIN, Alexander Victorovich, Moscow, 111394 (RU); KONDRATOVA, Lyubov Semenovna, Building 1, Flat 46 Moscow, 109377 (RU); VASILJEV, Alexander Mikhailovich, Flat 237 Moscow, 117330 (RU)
(74) Mandataire: Des Termes, Monique
(86) Numéro de dépôt international: FR9301296
(87) Numéro de publication internationale: WO9414724

(56) Documents cités:
- FR-A- 2 508 999
- US-A- 4 152 482

## Description

### DOMAINE DE L'INVENTION

La présente invention se rapporte au domaine de la fabrication des matériaux structuraux réfractaires et peut être utile dans la fabrication d'isolants thermiques pour les technologies à haute température, dans les techniques de la métallurgie et de l'aéronautique.

### DESCRIPTION DE L'ART ANTERIEUR

L'art antérieur dans le domaine auquel la présente invention se rapporte peut être caractérisé par plusieurs solutions techniques conventionnelles destinées d'une manière ou d'une autre à l'obtention de matériaux poreux (de basse densité), dans la mesure où les matériaux carbonés poreux ont une conductivité thermique 10 à 15 fois plus faible que celle des matériaux carbonés compacts.

Un procédé est connu dans la technique pour fabriquer des isolants thermiques poreux à base de carbone par l'introduction d'un agent moussant, en particulier un sel métallique, dans les composants de départ [JP-A-59141410]. Selon ce procédé, on mélange de la poudre de graphite avec un liant (résine synthétique ou brai de pétrole) et une poudre de sel métallique (NaCl). Le mélange obtenu est moulé et lors de la cokéfaction à température élevée, il est soumis à une lixiviation, de sorte que le sel est dissous et que des pores se forment.

L'inconvénient de ce procédé est l'obtention d'un matériau ayant des propriétés isotropes et une conductivité thermique plutôt élevée due au rayonnement thermique dans les pores et à la conductivité thermique élevée du graphite.

On connaît aussi un procédé dans la technique pour obtenir un matériau carboné poreux à base de fibres de carbone courtes et d'un liant, avec un additif constitué d'une substance granulaire soluble qui conduit à la formation de pores lors de la dissolution [JP-B-6150912]. Selon ce procédé, on broie de petits morceaux d'un mélange constitué de fibres de carbone courtes et d'une résine, et on ajoute à la composition obtenue une substance granulaire soluble. Lors du chauffage et du moulage sous pression, la préforme est placée dans un solvant, et après dissolution de la substance granulaire, on la carbonise.

Ce procédé permet d'obtenir des matériaux hautement poreux ayant une distribution étroite de pores de faible dimension, et une résistance mécanique raisonnablement élevée mais de basses propriétés d'isolation thermique, en dépit de la structure poreuse et de la présence de fibres, dans la mesure où il n'empêche pas la perte de chaleur par rayonnement.

On sait que le transfert de chaleur dans un composite carboné se produit soit comme flux de chaleur à travers la partie solide de la structure, soit par conductivité radiative dans les pores. Le degré de transfert de chaleur par le flux de chaleur à travers les parties monolithiques (compactes) du composite est défini par la proportionnalité du flux de chaleur à la fraction volumique du composant solide dans la direction du flux, tandis que l'intensité du transfert de chaleur radiatif est proportionnelle à la puissance 4 de la température absolue, c'est-à-dire qu'elle augmente drastiquement avec la température. Par conséquent, dans le cas d'un isolant thermique fonctionnant dans des conditions de température élevée avec un rayonnement observable, l'effet radiatif peut être réduit en mettant des écrans, comme des fibres à orientation transversale, dans le chemin de celle-ci.

On connaît aussi dans la technique un procédé pour fabriquer un isolant thermique carboné de basse densité, à base de fibres discrètes de 250 à 750 µm de long et d'un liant contenant du carbone, avec un additif de graphite en flocons [US-A-3 793 204]. Ce procédé comprend le mélange de fibres de carbone, d'un liant (brai), et de graphite naturel broyé, dans le rapport de 1,0:0,5:1,0 à 1,0:0,7:0,5 (% en poids), suivi de la carbonisation du liant.

Le matériau obtenu, d'une densité de 180 à 200 kg/m³ présente une conductivité thermique sous vide de 0,18 à 0,20 W/(m*K) à 1 300 K, et de 0,6 à 0,8 W/(m*K) à 2 500 K, mais il lui manque une capacité de support de charge adéquate, nécessaire pour les matériaux structuraux, puisqu'il n'est pas assez rigide, ce qui le rend utile seulement pour combler les trous ou nécessite un moyen de renfort supplémentaire.

On connaît aussi dans la technique un procédé, le plus proche de la proposition revendiquée ici, pour fabriquer un isolant thermique composite carboné, à base de fibres de carbone et d'un liant thermodurcissable carbonisé [US-A-4 152 482]. Ce procédé comprend la préparation d'une suspension de fibres de carbone et d'un liant thermodurcissable en poudre dans un liquide dispersif comme l'eau. L'eau est ensuite éliminée en versant la suspension dans un réservoir dont le fond est perforé, le dépôt fibreux obtenu, comme prévu, s'orientant le long du fond du réservoir tandis que l'eau s'élimine. Le dépôt est ensuite séché, on fait durcir le liant en polymère thermodurcissable, puis on le traite thermiquement dans une atmosphère inerte jusqu'à ce qu'il soit carbonisé.

Pour obtenir des préformes de plus de 3 cm d'épaisseur, on répète le cycle décrit ci-dessus plusieurs fois pour empêcher l'écrasement du matériau.

L'utilisation d'eau comme liquide dispersif selon ce procédé ne permet pas de disposer correctement les fibres de carbone, puisque l'eau a une mauvaise mouillabilité par rapport aux fibres et aux particules du liant, ce qui provoque leur rapide dépôt de la suspension, c'est-à-dire que la suspension elle-même est instable dans le temps. En plus, au moment de l'élimination de l'eau (par aspiration au travers des perforations du moule), les fibres qui sont transportées par le flux rapide de l'eau, ou le dépôt, s'orientent d'autant plus dans la direction opposée (le long de l'axe des perforations).

En plus, l'utilisation d'eau nécessite de sécher les couches de la préforme déposées, ce qui augmente la durée du procédé et la main-d'oeuvre nécessaire dans ce procédé, sans pour autant améliorer les propriétés du matériau.

En outre, le coke résultant de la carbonisation du liant (résine ou brai) a une structure densifiée dans les couches adjacentes à la surface des fibres, ce qui ne confère pas de résistance au matériau et n'en améliore pas les propriétés d'isolant thermique.

La teneur élevée du liant formant une matrice de coke lors de la carbonisation réduit la capacité de traitement du matériau, puisque dans ce cas la carbonisation provoque des contraintes internes, des fissures, une émission considérable de gaz et, en conséquence, des changements des dimensions géométriques et de la forme des articles fabriqués selon cette technique.

### DESCRIPTION DE L'INVENTION

L'objectif de la présente invention est de fournir un procédé de fabrication simple et non coûteux qui assure l'obtention d'un isolant thermique de basse densité (léger) n'ayant pas tendance à se rétrécir lors de la cuisson, et possédant des propriétés structurales de support de charge, dont les caractéristiques d'isolant thermique sont comparables à celles du prototype décrit dans l'art antérieur donné plus haut.

La solution du problème recherchée est assurée du fait que, selon le procédé revendiqué pour fabriquer un isolant thermique carboné structural, qui comprend la préparation d'une suspension de fibres de carbone discrètes en les agitant dans un liquide dispersif, le moulage d'une préforme et l'orientation des fibres discrètes, une partie du liquide dispersif étant éliminée, suivi de la cuisson de la préforme dans un moule, on utilise comme liquide dispersif un liquide viscoplastique ayant une bonne mouillabilité par rapport aux composants de la suspension, la préparation de la suspension par agitation des fibres de carbone dans un liquide viscoplastique se poursuivant jusqu'à ce que les fibres se séparent en filaments uniformément répartis et, après moulage et cuisson, une rigidité supplémentaire est conférée à la préforme en déposant du carbone pyrolytique dans sa structure poreuse. L'orientation des filaments est de préférence effectuée en versant au préalable la suspension sur la surface d'un filtre d'aspiration, où le façonnage préalable de la préforme est aussi effectué.

L'emploi d'un liquide viscoplastique (polyglycols, glycérine, huiles de pétrole, ou un mélange de ceux-ci) comme liquide dispersif est destiné à réunir un ensemble de facteurs essentiels pour l'isolant thermique et le procédé de fabrication de celui-ci, grâce à l'exercice utile de forces résultant de l'interaction du liquide mouillant avec les fibres et les filaments de carbone, ainsi qu'aux particularités de carbonisation de ce liquide :
∗ préparation d'une suspension stable de filaments pour assurer leur dépôt uniforme et leur orientation parallèlement à la surface filtrante, lors de l'élimination partielle du liquide par filtration ;
∗ obtention d'une préforme de structure stratifiée lors de l'orientation hydrodynamique des filaments sur le filtre d'aspiration ;
∗ assurance de la stabilité de la préforme mouillée obtenue sur le filtre d'aspiration ;
∗ empêchement du retrait du matériau lors de la carbonisation du liquide viscoplastique resté dans la préforme, ainsi que maintien d'une faible émission de gaz ;
∗ obtention, lors de la carbonisation du liquide viscoplastique, d'une matrice de coke sous la forme d'une pellicule poreuse du résidu de coke sur les filaments et entre ceux-ci.

Les facteurs ci-dessus assurent la préparation d'une préforme d'une épaisseur désirée (jusqu'à 100 mm) dans un procédé de moulage et cuisson à un cycle, et empêchent l'écrasement et la fissuration du matériau.

La préparation de la suspension de fibres dans le milieu liquide viscoplastique capable de mouiller la surface des fibres favorise une séparation rapide des fibres en filaments sous l'action de forces mouillantes et la formation de la suspension de filaments, dans un état effectivement proche de leur flottabilité zéro. En outre, la mouillabilité du liquide dispersif viscoplastique favorise le dépôt sur la surface des filaments (lors de l'élimination partielle du liquide par aspiration) d'une pellicule de liquide viscoplastique assurant l'adhésivité des filaments entre eux et ainsi, la possibilité de les manipuler comme une préforme unique et, lors de la carbonisation du liquide viscoplastique, cette pellicule se convertit en une pellicule poreuse d'un résidu de coke liant les filaments ensemble. Dans ce cas, le rendement en coke n'est pas supérieur à 0,15 g pour 1 g de la masse de liquide viscoplastique, c'est-à-dire beaucoup plus bas (plus de trois fois plus bas) que celui obtenu à partir de brai ou de résine synthétique. Par ailleurs, en raison de ce qui précède, lors de la carbonisation, un grand nombre de filaments mouillés dans la préforme ont tendance à ne pas durcir d'un coup mais plutôt à s'épaissir progressivement, restant ainsi plastiques jusqu'à ce que la carbonisation complète soit atteinte. Cela garantit l'absence de contraintes et fissures internes et, par conséquent, permet d'accroître l'épaisseur de la préforme en un cycle unique.

L'utilisation, comme liquide viscoplastique, d'un mélange de brai et d'huile (huiles) choisis dans le groupe des produits du pétrole garantit la plastification de la préforme mouillée, nécessaire en particulier lors de la fabrication d'articles de formes compliquées (la préforme mouillée étant pliée lors du moulage). Ici, on utilise du brai comme plastifiant, qui devient ainsi par suite du contact avec le liquide viscoplastique qui dissout partiellement le brai. Du fait de la faible teneur en brai, une conversion supplémentaire de celui-ci en matrice de coke n'est pas nuisible aux propriétés du matériau.

L'opération préliminaire consistant à verser la suspension de filaments sur la surface du filtre d'aspiration fournit (du fait de la viscosité du liquide viscoplastique, de la mobilité des filaments mouillés avec celui-ci, et de sa lente filtration par les perforations du filtre d'aspiration) un moyen supplémentaire pour disposer les filaments transportés par le flux de la suspension le long de la surface du filtre d'aspiration, et pour obtenir non seulement l'orientation parallèlement à la surface perforée, mais aussi une texture stratifiée des filaments de la préforme.

Dans un matériau de cette texture (avec les filaments séparés par des couches intermédiaires de la pellicule poreuse de résidu de coke), on obtient une faible conductivité thermique du fait de l'effet d'écran au rayonnement des couches de filaments.

Avant la cuisson, la préforme est moulée pour atteindre le rapport phase solide/phase liquide de 1:10 à 1:4 dans celle-ci, de façon à obtenir le résidu de coke après la cuisson comme une structure pelliculaire poreuse répartie entre les filaments dans le matériau. Cette structure, en plus des premières propriétés de support de charge, confère une souplesse au matériau pour qu'il ne soit pas friable.

L'application d'une couche de carbone pyrolytique sur la surface de la préforme poreuse au moment de la cuisson compense une certaine perte de résistance provoquée par l'absence de liant conventionnel, et accroît la rigidité de la structure poreuse du résidu de coke sans densifier le matériau.

Par conséquent, l'ensemble de mesures prises garantit l'obtention d'un isolant thermique léger possédant une capacité de support de charge et une conductivité thermique raisonnablement basse par rapport aux matériaux conventionnels destinés au même objectif.

### REALISATION PREFEREE DE L'INVENTION

Afin de réaliser le procédé revendiqué et d'obtenir un isolant thermique léger ayant une capacité de support de charge, on prépare une suspension de filaments de carbone discrets dans un liquide viscoplastique. Comme liquide viscoplastique, on utilise un mélange de charbon-brai de goudron et de glycérine, ce mélange étant préparé soit directement avant le mélange des fibres de carbone discrètes avec la glycérine, soit simultanément avec celui-ci. Les fibres de carbone de départ ne doivent pas être plus longues que 50 mm, l'addition de brai (particules non supérieures à 1 mm) étant dans une quantité non supérieure à 0,5 % en poids des fibres.

La longueur des fibres (non supérieure à 50 mm) est régie par le fait qu'en cas de fibres longues, il est impossible de les broyer en filaments de 0,2 à 0,5 mm de long lorsqu'on agite la suspension, et il ne se forme pas de structure stratifiée. Lors de l'agitation des composants de la suspension dans le liquide viscoplastique, il se produit une séparation des fibres en filaments, celles-ci étant broyées à des longueurs de 0,2 à 0,5 mm, ainsi qu'une dissolution partielle de la poudre de brai. On préchauffe la glycérine (343 à 350 K) pour obtenir une viscosité optimale de 50 à 500 cP et, en même temps que la charge de fibres de carbone et le brai, elle est chargée dans un mélangeur où elle est agitée pendant 10 à 20 min. jusqu'à ce que les fibres se séparent en filaments et qu'on obtienne une suspension homogène ; la quantité de la charge de fibres dépendant de la taille de l'article devant être fabriqué (plaques, cônes, cylindres, etc.). Par exemple, pour obtenir un article sous la forme d'une plaque de 500∗500∗50 mm, la charge de fibres de carbone doit être de 1,4 à 1,5 kg. Si on veut obtenir des articles plus grands, la charge de fibres de carbone doit être par conséquent augmentée, ainsi que la teneur des autres composants.

Le liquide viscoplastique est pris en une quantité d'au moins 45 kg. Ensuite, au moyen d'un filtre d'aspiration, dont la taille et la forme correspondent à la section transversale du moule, l'orientation des filaments de carbone, la superposition stratifiée de ceux-ci ainsi que la première formation d'une préforme sont réalisés. A cette fin, on verse la suspension obtenue sur le tamis du filtre d'aspiration, dont les perforations ont une section transversale de passage non supérieure à 1 mm² afin d'avoir une répartition uniforme de celles-ci sur toute la surface du filtre d'aspiration, tout en commençant à éliminer la glycérine par les perforations du filtre d'aspiration d'évacuation. Cela est possible grâce à la bonne mouillabilité et la viscosité du liquide viscoplastique (glycérine), et au type laminaire de l'étalement de la suspension (flux) sur le tamis du filtre d'aspiration, ce qui garantit une superposition stratifiée des filaments.

Dans le cas d'une viscosité du liquide viscoplastique supérieure à 500 cP, l'étalement de celui-ci est gêné et on n'obtient pas de superposition stratifiée. Alors qu'à une viscosité inférieure à 50 cP, un étalement rapide du liquide se produit, avec une impossibilité de disposition stratifiée, ce qui empêche l'orientation horizontale des filaments et provoque l'enroulement des fibres. Le degré d'évacuation avec l'augmentation de l'épaisseur de la préforme mouillée sur le filtre d'aspiration est augmenté de façon continue jusqu'à atteindre finalement la pression absolue, sous le filtre d'aspiration, de 0,07 à 0,085 MPa.

Après avoir aspiré toute la suspension, on poursuit l'évacuation pendant 3 à 5 min. par millimètre d'épaisseur de la préforme, pas plus de 10 kg de glycérine (avec du charbon-brai de goudron) étant retenus dans la préforme par kilogramme de filaments de carbone. Ensuite, on enlève la préforme mouillée obtenue du filtre d'aspiration sans perturber la superposition des filaments, puis on la met dans un moule. L'épaisseur de la préforme mouillée ainsi obtenue dépasse celle du modèle, ce qui est nécessaire pour permettre la réalisation du moulage subséquent de la préforme afin d'obtenir un rapport désiré des phases solide et liquide (de 1:10 à 1:4).

A une quantité supérieure de la phase liquide, le matériau de la préforme mouillée a une structure qui empêche d'obtenir les dimensions géométrique requises de l'article devant être obtenu ; tandis qu'à une quantité inférieure de la phase liquide, la liaison entre les filaments n'est pas assez solide, ce qui provoque la formation d'une structure relâchée du matériau, sans rigidité suffisante.

L'épaisseur de la préforme dans le moule est abaissée à l'épaisseur du modèle sous une pression spécifique allant jusqu'à 0,7 MPa sur la presse, ce qui élimine la quantité en excès de liquide viscoplastique, après quoi la préforme est fixée dans le moule à cette épaisseur et envoyée à la cuisson pour la carboniser.

La carbonisation de la préforme est réalisée dans une atmosphère gazeuse inerte ou réductrice, de préférence dans un milieu de remplissage de coke (carbone). Dans ce cas, la glycérine liquide et ses vapeurs sont piégées par le milieu carboné poreux et subissent une pyrolyse avec destruction en produits volatils simples (dioxyde de carbone et vapeur).

L'élévation de température est effectuée pendant 24 h jusqu'à 1 073 à 1 173 K, avec un maintien au niveau de température supérieur pendant pas plus de 90 h. Après la carbonisation, la rigidité de la préforme est augmentée en déposant du carbone pyrolytique dans la structure poreuse de celle-ci. En dépit du fait qu'après la formation de la matrice de coke, la préforme soit déjà capable de conserver sa forme et qu'elle soit usinable, elle est encore insuffisamment rigide : la courbe des contraintes de ce matériau n'a en fait pas de partie de charge élastique et est d'une nature de plasticité forcée.

Le dépôt de carbone pyrolytique sur la surface interne des pores du matériau confère à ce dernier une élasticité et une capacité de support de charge accrue, sans changement de la porosité (densité apparente) de celui-ci.

Le dépôt de carbone pyrolytique est réalisé dans un four électrique sous vide, dans un gaz combustible de ville dont le principal composant est le méthane. On peut aussi utiliser des hydrocarbures et d'autres types de gaz (propane, butane, benzène, etc.).

Selon la teneur en méthane dans le gaz combustible de ville, la charge, et l'espace du four, ainsi que selon la température des préformes en traitement, le procédé est exécuté au débit du gaz de ville, ce qui garantit une durée acceptable (40 à 100 h) pour obtenir un matériau ayant une conductivité thermique désirée. Ici, la quantité de carbone pyrolytique déposé est de 15 à 32 % en poids de la préforme. A une quantité de carbone pyrolytique supérieure à 32 %, la conductivité thermique du matériau augmente, tandis qu'à une quantité inférieure à 15 %, la rigidité désirée et, par conséquent, la capacité de support de charge, ne sont pas atteintes.

Pour mieux comprendre la présente invention, des exemples spécifiques sont donnés ci-dessous, illustrant la réalisation du présent procédé pour fabriquer un isolant thermique structural, ainsi que les résultats des essais.

**Exemple 1.** On a fabriqué un article sous la forme d'une plaque de 500∗500∗50 mm. On a préparé une suspension à partir de fibres de carbone d'une longueur allant jusqu'à 45 mm dans de la glycérine, avec un additif de poudre de brai dont la taille des particules n'est pas supérieure à 1 mm. Les composants ont été pris dans les quantités suivantes, en kg :

| | |
|---|---|
| ∗ Fibres de carbone | 1,5 |
| ∗ Brai | 0,3 |
| ∗ Glycérine | 45,0 |

Le mélange obtenu a été mélangé dans un mélangeur à pales pendant 15 min. à la vitesse de 2 tr/sec. La glycérine a été préchauffée à la température de 348 K, à laquelle une viscosité désirée (450 cP) a été atteinte.

En versant la suspension obtenue sur la surface du filtre d'aspiration, l'épaisseur désirée (supérieure de 10 % à l'épaisseur du modèle) a été progressivement atteinte, en fournissant sous le filtre d'aspiration une pression absolue de 0,07 MPa, qui a été progressivement réduite avec l'épaisseur de la préforme. Le vide a été maintenu pendant 5 min. de plus. Dans la préforme obtenue (lavée), le rapport phase solide/phase liquide atteint était de 1:10.

La préforme a été enlevée du filtre d'aspiration en retournant le contenu du filtre sur une plaque auxiliaire.

Après avoir disposé la préforme obtenue dans un moule, elle a été comprimée à une pression spécifique de 0,7 MPa jusqu'à ce que l'épaisseur du modèle, de 50 mm, soit atteinte.

La carbonisation de la préforme a été réalisée dans le moule à la température de 1 173 K avec une montée en température durant 24 h et un maintien pendant 90 h. Ensuite, du carbone pyrolytique a été déposé sur la surface des pores dans la préforme. Ce procédé a été réalisé dans du gaz de ville (90 % de méthane, 5 % d'hydrogène) dans un four d'un espace de 6 m³ sous la pression absolue (2 200 ± 665 Pa) et à la température de 1 223 K. Le débit du gaz de ville a été maintenu à 7,5 ± 0,12 m³/h.

Le matériau obtenu avait le rapport suivant des composants, en % en poids :

| | |
|---|---|
| ∗ Filaments de carbone | 46 |
| ∗ Coke de glycérine | 18 |
| ∗ Coke de brai | 4 |
| ∗ Carbone pyrolytique | 32 |

Le coke dans le matériau obtenu était présent comme structure pelliculaire poreuse répartie sur les filaments et entre ceux-ci. La surface du résidu de coke était revêtue de carbone pyrolytique.

Pour déterminer les propriétés physico-mécaniques du matériau obtenu, on a fabriqué des échantillons d'une forme régulière, principalement sous la forme de parallélépipèdes, en découpant les préformes obtenues (articles) avec une scie, un cutter ou autres, et la densité apparente, la résistance ultime à la compression, la résistance ultime à la flexion, la conductivité thermique, et la teneur en cendres ont été mesurées.

La densité apparente a été déterminée sur la base du rapport masse/volume de l'échantillon, l'erreur de mesure du volume ne dépassant pas 0,7 %.

La résistance ultime à la compression a été déterminée sur des échantillons de 20∗10∗10 mm et de 10∗10∗10 mm.

La structure du matériau obtenu a été observée visuellement au moyen d'un microscope.

Les essais de flexion (flexion en 3 points) ont été réalisés sur des échantillons de 100∗20∗10 mm.

La conductivité thermique a été déterminée sur des échantillons de 10∗10∗10 mm et de 100∗12∗10 mm sur la base des données expérimentales sur le gradient de température produit par une source de chaleur standard.

La teneur en cendres du matériau a été déterminée par la calcination de celui-ci dans un creuset d'alundum de type fermé, dans un four à moufle à la température de 1 173 K, dans de l'air, jusqu'à ce que le poids résiduel constant soit atteint.

Les résultats des mesures des propriétés physico-mécaniques du matériau obtenu dans l'exemple 1 sont présentés au tableau 1.

**Tableau 1**

| Caractéristiques | Unité de mesure | Niveau |
|---|---|---|
| Densité apparente | kg/m³ | 190 à 250 |
| Résistance ultime : | | |
| à la compression (au travers des filaments) | MPa | 1,2 |
| à la flexion (le long des filaments) | MPa | 2,8 |
| Conductivité thermique, au travers des filaments, à la température K, sous vide : | W/(m*K) | |
| 300 K | | 0,24 |
| 2 000 K | | 0,60 |
| Coefficient de dilatation thermique : | *10⁻⁶/deg | |
| le long et | | 1,2 |
| au travers des filaments | | 6,0 |
| Teneur en cendres | % | 0,05 à 0,1 |

**Exemple 2.** On a fabriqué une plaque de 500∗500∗80 mm. Pour préparer une suspension, on a utilisé des fibres de carbone de module élevé, à base de polyacrylonitrile (PAN), ayant une longueur initiale de 40 à 50 mm, en une quantité de 2,1 kg. Comme liquide viscoplastique, on a utilisé de la glycérine.

Après agitation du mélange pendant 15 min. à la vitesse de 2 tr/sec., on a obtenu une suspension de filaments de 0,2 à 0,5 mm, ayant une viscosité de 400 cP.

Le moulage ultérieur de la préforme mouillée dans un moule a été réalisé sous une pression spécifique minimale de 0,4 MPa, jusqu'à ce que le rapport phase solide/phase liquide de 1:10 soit atteint.

Après carbonisation de la préforme à 1 173 K, dépôt de carbone pyrolytique à 1 223 K, et traitement thermique à 2 373 K, on a obtenu un matériau dont les propriétés physico-mécaniques sont présentées au tableau 2.

**Tableau 2**

| Caractéristiques | Unité de mesure | Niveau |
|---|---|---|
| Densité apparente | kg/m³ | 150 à 200 |
| Résistance ultime à la compression : | MPa | |
| au travers des filaments | | 1,3 |
| le long des filaments | | 6,1 |
| Résistance ultime à la flexion : | MPa | |
| le long des filaments | | 1,6 |
| Conductivité thermique, à la température K : | W/(m*K) | |
| 300 K, au travers des filaments, | | 0,22 |
| 2 000 K, au travers des filaments, | | 0,49 |
| le long des filaments | | 0,98 |
| Coefficient de dilatation thermique, à une température de 300 à 2 300 K: | *10⁻⁶/deg | |
| au travers des filaments | | 6,2 |
| le long des filaments | | 1,9 |

La composition quantitative du matériau obtenu dans l'exemple 2 peut être caractérisée comme suit, en % en poids :

| | |
|---|---|
| ∗ Filaments de carbone à module élevé | 46 |
| ∗ Coke de glycérine | 34 |
| ∗ Carbone pyrolytique | 20 |

Les résultats de la mesure de la conductivité thermique du matériau obtenu dans l'exemple 2 sont présentés au tableau 3.

**Tableau 3**

| Température de l'essai, K | Matériau | | |
|---|---|---|---|
| | Carbonisé | Densifié avec du carbone pyrolytique | Traité à chaud |
| | Conductivité thermique, W/(m∗K) | | |
| 300 | 0,06 | 0,22 | 0,19 |
| 500 | 0,07 | 0,22 | 0,21 |
| 800 | 0,11 | 0,25 | 0,29 |
| 1 000 | 0,16 | 0,30 | 0,32 |
| 1 200 | 0,21 | 0,33 | 0,35 |
| 1 400 | 0,28 | 0,38 | 0,40 |
| 1 600 | 0,37 | 0,43 | 0,46 |
| 1 800 | 0,48 | 0,51 | 0,53 |
| 2 000 | 0,60 | 0,60 | 0,62 |
| 2 200 | 0,76 | 0,72 | 0,75 |
| 2 400 | 0,97 | 0,97 | 0,92 |
| 2 600 | 1,25 | 1,05 | 1,10 |
| 2 800 | 1,66 | 1,23 | 1,34 |

**Exemple 3.** On a suivi la procédure de l'exemple 2, mis à part qu'on a utilisé des fibres de carbone à base de rayonne, qui ont été soumises à un broyage préalable.

Le traitement thermique après la carbonisation a été réalisé à 1 873 K pour obtenir un matériau dont les propriétés sont présentées au tableau 4.

**Tableau 4**

| Caractéristiques | Unité de mesure | Niveau |
|---|---|---|
| Densité apparente | kg/m³ | 200 |
| Résistance ultime à la compression, | MPa | |
| au travers des filaments | | 2,0 |
| Résistance ultime à la flexion : | MPa | |
| au travers des filaments | | 1,6 |
| Conductivité thermique, à la température K : au travers des filaments, | W/(m*K) | |
| 300 K, | | 0,25 |
| 2 000 K | | 1,25 |
| Coefficient de dilatation thermique, à une température de 300 à 2 300 K, | *10⁻⁶/deg | |
| le long des filaments | | 2,4 |
| Teneur en cendres | % | 0,03 |

Le matériau obtenu avait la composition suivante, en % en poids :

| | |
|---|---|
| ∗ Filaments de carbone | 48 |
| ∗ Coke de glycérine | 37 |
| ∗ Carbone pyrolytique | 15 |

**Exemple 4.** La procédure de l'exemple 1 a été suivie, sauf que comme liquide viscoplastique, on a utilisé de l'éthylène glycol sans addition de brai. On a fabriqué une plaque de 500∗500∗45 mm. Les fibres de carbone ont été prises en une quantité de 1,0 kg, et on a utilisé l'éthylèneglycol à température ambiante (sans préchauffage), compte tenu de la basse viscosité de l'éthylèneglycol (environ 340 cP).

Une préforme mouillée a été traitée sur le filtre d'aspiration jusqu'à ce qu'une épaisseur de 60 mm soit atteinte, après quoi elle a été moulée ultérieurement de 25 % (abaissement à 45 mm, rapport phase solide/phase liquide de 1:4).

Après carbonisation de la préforme et dépôt de carbone pyrolytique, on a obtenu un matériau dont les propriétés sont présentées au tableau 5.

**Tableau 5**

| Caractéristiques | Unité de mesure | Niveau |
|---|---|---|
| Densité apparente | kg/m³ | 250 à 350 |
| Résistance ultime à la flexion le long des filaments, à la température K: | MPa | |
| 300 K, | | 2,50 |
| 1 800 K | | 2,80 |
| 2 000 K | | 2,45 |
| Résistance ultime à la compression, | MPa | |
| au travers des filaments | | 2,0 |
| le long des filaments | | 4,3 |
| Conductivité thermique, au travers des filaments, à la température K: | W/(m*K) | |
| 300 K, | | 0,18 |
| 2 000 K | | 0,70 |
| Teneur en cendres | % | 0,06 |

Le matériau obtenu avait la composition suivante, en % en poids :

| | |
|---|---|
| ∗ Filaments de carbone | 51 |
| ∗ Coke d'éthylèneglycol | 26 |
| ∗ Carbone pyrolytique | 23 |

**Exemple 5.** On a fabriqué une plaque de 500∗500∗50 mm. Comme liquide viscoplastique, on a utilisé des huiles de pétrole (huiles à vide) ayant une viscosité allant jusqu'à 10 cSt à 327 K. 0,45 kg de charbon-brai de goudron ayant une taille des particules allant jusqu'à 1,5 mm a été ajouté à 45 kg de l'huile.

On a préparé une suspension à partir de 1,2 kg de fibres de carbone à base de PAN de 50 mm de long, ayant une viscosité de 200 cP et un rapport phase solide/phase liquide de 1:9. Les autres opérations ont été réalisées suivant la procédure de l'exemple 1.

Les propriétés du matériau obtenu sont présentées au tableau 6.

**Tableau 6**

| Caractéristiques | Unité de mesure | Niveau |
|---|---|---|
| Densité apparente | kg/m³ | 320 à 340 |
| Résistance ultime à la compression | MPa | |
| au travers des filaments | | 1,6 |
| Résistance ultime à la flexion | MPa | |
| le long des filaments | | 3,0 |
| Conductivité thermique, à la température K : | W/(m*K) | |
| 300 K, | | |
| au travers des filaments, | | 0,22 |
| le long des filaments | | 0,55 |
| 2 000 K | | |
| au travers des filaments | | 0,60 |
| le long des filaments | | 1,65 |
| Coefficient de dilatation thermique dans la gamme de température de 300 à 2 300 K | *10⁻⁶/deg | |
| le long des filaments | | 1,8 |
| au travers des filaments | | 6,2 |
| Teneur en cendres | % | 0,1 |

Le matériau obtenu avait la composition suivante, en % en poids :

| | |
|---|---|
| ∗ Filaments de carbone | 42 |
| ∗ Coke d'huile de pétrole | 20 |
| ∗ Coke de brai | 12 |
| ∗ Carbone pyrolytique | 26 |

D'après les exemples présentés ci-dessus, le niveau de conductivité thermique du matériau selon le procédé revendiqué est effectivement indépendant des types de liquide viscoplastique et de fibres de carbone.

Le degré de broyage des fibres de carbone (filaments) dans la suspension préparée, reste effectivement le même (0,2 à 0,5 mm) après l'agitation, indépendamment de la longueur initiale des fibres de carbone (non supérieure à 50 mm).

Tous les échantillons étudiés ont la superposition stratifiée de fibres et la matrice de coke sous la forme d'une structure pelliculaire.

### APPLICATION INDUSTRIELLE

La présente invention peut être utile pour fabriquer des isolants thermiques rigides, comme des conduits, des cylindres, des éléments de revêtement, des gaines thermiques pour divers appareils, tant de configurations simples que de configurations complexes.

## Revendications

1. Procédé de fabrication d'un isolant thermique structural en carbone, qui comprend la préparation d'une suspension de fibres de carbone discrètes en les mélangeant sous agitation dans un liquide dispersif, le façonnage d'une préforme à partir de cette suspension avec orientation simultanée des filaments discrets, une partie du liquide dispersif étant éliminée, suivi de la cuisson de la préforme dans un moule, caractérisé en ce que ledit liquide dispersif est un liquide viscoplastique carbonisable ayant une bonne mouillabilité par rapport auxdits composants de la suspension, ladite préparation de suspension étant réalisée en mélangeant sous agitation des fibres de carbone dans un liquide viscoplastique carbonisable jusqu'à ce que les fibres se séparent en filaments uniformément répartis, et après le moulage et la cuisson, une rigidité supplémentaire est conférée à la préforme en déposant du carbone pyrolytique dans sa structure poreuse.

2. Procédé selon la revendication 1, caractérisé en ce que. ledit liquide viscoplastique est un polyglycol ou de la glycérine.

3. Procédé selon la revendication 1, caractérisé en ce que ledit liquide viscoplastique est une huile choisie dans le groupe des huiles de pétrole.

4. Procédé selon la revendication 1, caractérisé en ce que ledit liquide viscoplastique est un mélange de brai avec un polyglycol, ou avec une huile choisie dans le groupe des huiles de pétrole, ou avec un mélange de ces huiles, ou avec de la glycérine.

5. Procédé selon l'une quelconque des revendications 1 à 4, caractérisé en ce que l'orientation des filaments est réalisée en versant au préalable ladite suspension sur la surface d'un filtre d'aspiration sur laquelle est d'abord façonnée une préforme.

6. Procédé selon l'une quelconque des revendications 1 à 5, caractérisé en ce que ladite suspension est préparée et utilisée à un état chauffé au moment où elle atteint la viscosité de 50 à 500 cP.

7. Procédé selon l'une quelconque des revendications 1 à 6, caractérisé en ce que ladite suspension de filaments est préparée à partir de fibres dont la longueur ne dépasse pas 50 mm.

8. Procédé selon l'une quelconque des revendications 1 à 7, caractérisé en ce qu'après l'extraction d'une partie dudit liquide viscoplastique et le façonnage préalable d'une préforme, on moule ensuite celle-ci dans un moule jusqu'à ce que le rapport phase solide/phase liquide de 1:10 à 1:4 soit atteint.

9. Isolant thermique structural en carbone, qui comprend une charge de carbone fibreuse sous la forme de filaments discrets et une matrice de coke, caractérisée en ce que ladite charge fibreuse est comprise comme filaments stratifiés, et ladite matrice de coke comme structure poreuse ayant l'aspect d'une pellicule de résidu de coke sur lesdits filaments et entre ceux-ci, la surface desdits filaments et de la structure poreuse du résidu de coke étant revêtue de carbone pyrolytique.

10. Isolant thermique en carbone selon la revendication 9, caractérisée en ce que lesdits filaments sont compris en une quantité de 10 à 20 % en volume.

## Patentansprüche

1. Verfahren zur Herstellung eines Struktur-Wärmedämmstoffes aus Kohlenstoff, das die Herstellung einer Suspension von diskreten Kohlenstoffasern, welche man dazu unter Rühren mit einer dispergierenden Flüssigkeit mischt, das Formen eines Vorformstücks ausgehend von dieser Suspension mit gleichzeitiger Orientierung der diskreten Fädchen, wobei ein Teil der dispergierenden Flüssigkeit entfernt wird, gefolgt von der Wärmebehandlung des Vorformstücks in einer Form, umfaßt, dadurch gekennzeichnet, daß genannte dispergierende Flüssigkeit eine carbonisierbare viskoplastische Flüssigkeit ist, die eine gute Benetzbarkeit gegenüber den genannten Bestandteilen der Suspension besitzt, wobei die genannte Herstellung der Suspension ausgeführt wird durch Mischen der Kohlenstoffasern mit einer carbonisierbaren viskoplastischen Flüssigkeit unter Rühren, bis sich die Fasern in gleichförmig verteilte Fädchen trennen, und daß nach dem Formen und der Wärmebehandlung durch Abscheidung von pyrolytischem Kohlenstoff in der porösen Struktur des Vorformstücks diesem eine zusätzliche Festigkeit verliehen wird.

2. Verfahren nach Anspruch 1, dadurch gekennzeichnet, daß genannte viskoplastische Flüssigkeit ein Polyglycol oder Glycerin ist.

3. Verfahren nach Anspruch 1, dadurch gekennzeichnet, daß genannte viskoplastische Flüssigkeit ein in der Gruppe der Erdöle gewähltes Öl ist.

4. Verfahren nach Anspruch 1, dadurch gekennzeichnet, daß genannte viskoplastische Flüssigkeit eine Mischung von Teer mit einem Polyglycol oder mit einem in der Gruppe der Erdöle gewählten Öl oder mit einer Mischung dieser Öle oder mit Glycerin ist.

5. Verfahren nach einem der Ansprüche 1 bis 4, dadurch gekennzeichnet, daß die Orientierung der Fädchen dadurch realisiert wird, daß man genannte Suspension vorher auf die Oberfläche eines Saugfilters gießt, auf der zunächst ein Vorformstück geformt wird.

6. Verfahren nach einem der Ansprüche 1 bis 5, dadurch gekennzeichnet, daß genannte Suspension in einem erwärmten Zustand in dem Zeitpunkt, wo sie die Viskosität von 50 bis 500 cP erreicht, hergestellt und verwendet wird.

7. Verfahren nach einem der Ansprüche 1 bis 6, dadurch gekennzeichnet, daß genannte Suspension von Fädchen ausgehend von Fasern hergestellt wird, deren Länge 50 mm nicht überschreitet.

8. Verfahren nach einem der Ansprüche 1 bis 7, dadurch gekennzeichnet, daß man nach der Entfernung eines Teils der genannten viskoplastischen Flüssigkeit und nach der vorhergehenden Formgebung eines Vorformstücks dieses anschließend in einer Form formt, bis ein Verhältnis von fester Phase zu flüssiger Phase von 1:10 bis 1:4 erreicht ist.

9. Struktur-Wärmedämmstoff aus Kohlenstoff, der ein Füllmaterial von Faser-Kohlenstoff in Form von diskreten Fädchen und eine Matrix von Koks umfaßt, dadurch gekennzeichnet, daß genanntes Faser-Füllmaterial als geschichtete Fädchen, genannte Koks-Matrix als poröse Struktur enthalten ist, welche die Form eines Überzugs von Koks-Rückstand auf genannten Fädchen und zwischen diesen hat, wobei die Oberfläche der genannten Fädchen und der porösen Struktur des Koks-Rückstandes mit pyrolytischem Kohlenstoff überzogen ist.

10. Wärmedämmstoff aus Kohlenstoff nach Anspruch 9, dadurch gekennzeichnet, daß genannte Fädchen in einer Menge von 10 bis 20 Vol.-% enthalten sind.

## Claims

1. Process for producing a heat-insulating structural carbon material, which comprises preparing a suspension of finite carbon fibres by stirring them in a dispersive liquid, shaping a preform from said suspension with simultaneous orientation of discrete filaments, with a portion of the dispersive liquid being removed, followed by baking the preform in a mould, characterized in that the said dispersive liquid is a carbonizable, thermoplastic liquid exhibiting good wettability with respect to the said suspension components, the said suspension preparation by stirring carbon fibres in a carbonizable, thermoplastic liquid being carried out until the fibres are separated into uniformly distributed filaments, and after moulding and baking additional rigidity is imparted to the preform by depositing pyrolytic carbon in its porous structure.

2. Process of claim 1, characterized in that the said thermoplastic liquid is polyglycol or glycerine.

3. Process of claim 1, characterized in that the said thermoplastic liquid is an oil selected from the group of petroleum oils.

4. Process of claim 1, characterized in that the thermoplastic liquid is a mixture of pitch with a polyglycol or with an oil chosen from the group of petroleum oils or with a mixture of such oils, or with glycerine.

5. Process of any of the claims 1 to 4, characterized in that the orientation of the fibre filaments is carried out by prepouring the said suspension over a Nutsch-filter surface on which a preform is first shaped.

6. Process of any of the claims 1 to 5, characterized in that the said suspension is prepared and used in a heated state upon attaining a viscosity of 50 to 500 cP.

7. Process of any of the claims 1 to 6, characterized in that the said suspension of fibre filaments is prepared from fibres not over 50 mm long.

8. Process of any of the claims 1 to 7, characterized in that after removing a portion of the said thermoplastic liquid and preshaping a preform, the latter is postmoulded in a mould until a solid phase/liquid phase ratio of 1:10 to 1:4 is attained.

9. Heat-insulating structural carbon material which comprises a fibrous carbon filler in the form of discrete filaments and a coke matrix, characterized in that the said fibrous filler is comprised of laminated filaments and the said coke matrix is a porous film-like structure of coke residue on and between the said filaments, the surface of the said filaments and the pores of the coke residue structure being coated with pyrolytic carbon.

10. Heat-insulating carbon material according to claim 9, characterized in that the said filaments are present in the quantity of 10 to 20 vol.%.
